# EUROPEAN PATENT APPLICATION

(11) **EP 4 693 795 A1**
(43) Date of publication of application: **11.02.2026**
(21) Application number: 25194053.2
(22) Date of filing: 05.08.2025
(51) Int. Cl.: H02J 3/24, H02J 3/38

(54) **A METHOD FOR DAMPING OSCILLATIONS IN A POWER GRID**

(30) Priority: 07.08.2024 DK PA202430451
(71) Applicant: VESTAS WIND SYSTEMS A/S, 8200 Aarhus N (DK)
(72) Inventor: Lund, Torsten, 7000 Fredericia (DK); Engelken, Sönke, 8600 Silkeborg (DK); Petersen, Lennart, 8541 Skødstrup (DK)
(74) Representative: Vestas Patents Department

(57) **Abstract**

A method for damping oscillations in a power grid is provided. A damping vector (9) targeted at a position of a damping entity (11) and referencing a common reference time frame (4) is generated, based on an identified oscillation in the power grid, the damping vector (9) specifying a frequency, a phase angle and an amplitude. The damping vector (9) is provided to the damping entity (11), and the damping entity (11) reconstructs an oscillation signal corresponding to the oscillation in the power grid, based on the damping vector (9) and applying the common reference time frame (4). The damping entity (11) supplies and/or consumes active and/or reactive power to/from the power grid in accordance with the reconstructed oscillation signal, thus causing damping of the oscillation in the power grid.

## Description

### FIELD OF THE INVENTION

The present invention relates to a method for damping oscillations in a power grid by means of a damping entity being capable of supplying and/or consuming active and/or reactive power to/from the power grid. The method according to the invention results in accurate damping of the oscillations.

### BACKGROUND OF THE INVENTION

In large power grids, power oscillations may occur. Such oscillations are undesirable, since they may cause instabilities in the power grid, and it is therefore necessary to take measures in order to dampen power oscillations when they occur. In order to do so, power consumers or producers may be instructed to operate in a manner which counteracts detected power oscillations that may originate from the operation of other power consumers or producers.

In large power grids, there may a significant distance between positions where power oscillations are detected and positions where a damping entity, in the form of a power consumer or producer that may operate in order to counteract power oscillations, is connected to the power grid. Thus, power oscillations occurring at the position of a damping entity will likely differ from power oscillations measured at one or more measuring positions. In particular, the phase angle of the power oscillations will differ throughout the power grid. This has the consequence that, if information regarding the measured power oscillations was simply applied directly for determining how the damping entity should operate in order to dampen or counteract detected power oscillations, the resulting operation of the damping entity would not target the power oscillations as they appear at the position where the damping entity is connected to the power grid, and damping of the power oscillations would therefore not be obtained. Moreover, this may even result in amplification of the power oscillations.

In order to address the problem described above, it has previously been attempted to compensate for the distance between measuring positions and positions of damping entities by time stamping measurements and taking communication delays into account when generating the damping instructions for the damping entity. This may, e.g., include tuning a lead filter at the damping entity, so as to compensate for the communication delay within a certain frequency range, including correcting a phase shift induced by the time difference between measurement and damping. However, this approach has turned out to be inaccurate, in particular if the phase and/or amplitude of the power oscillation changes fast. Today, it is becoming common to time synchronize controllers with GPS clocks in order to be able to used logged data to reconstruct events across larger power systems. The present invention provides a means for utilizing this time synchronization to obtain a better control accuracy.

### DESCRIPTION OF THE INVENTION

It is an object of embodiments of the invention to provide a method for damping oscillations in a power grid which is more accurate than prior art methods.

It is a further object of embodiments of the invention to provide a method for damping oscillations in a power grid in which reliable and accurate damping is obtained in an easy manner.

The invention provides a method for damping oscillations in a power grid, the method comprising the steps of:
- defining a common reference time frame throughout the power grid,
- performing measurements, at at least one measurement position in the power grid, of voltage amplitude, voltage phase angle, frequency and/or power flow, and referencing the measurements to the common reference time frame,
- identifying an oscillation in the power grid and deriving a frequency, a phase angle and an amplitude of the oscillation, based on the performed measurements,
- selecting a damping entity being connected to the power grid at a damping position, the damping entity being capable of supplying and/or consuming active and/or reactive power to/from the power grid,
- generating a damping vector targeted at the damping position and referencing the common reference time frame, based on the identified oscillation in the power grid, the damping vector specifying a frequency, a phase angle and an amplitude, and providing the damping vector to the damping entity,
- the damping entity reconstructing an oscillation signal corresponding to the oscillation in the power grid, based on the damping vector and applying the common reference time frame, and
- the damping entity supplying and/or consuming active and/or reactive power to/from the power grid in accordance with the reconstructed oscillation signal, thus causing damping of the oscillation in the power grid.

Thus, the method according to the invention is a method for damping oscillations in a power grid, i.e. for damping power oscillations of the kind described above. This is obtained in the following manner.

Initially, a common reference time frame throughout the power grid is defined. This ensures that, regardless of the position within the power grid, observers refer to the same time frame.

Next, measurements are performed at at least one measurement position in the power grid. The performed measurements include measurements of voltage amplitude, voltage phase angle, frequency and/or power flow at the measurement position. The performed measurements are further referenced to the common reference time frame.

Next, an oscillation in the power grid is identified, based on the performed measurements, and a frequency, a phase angle and an amplitude of the oscillation is derived. Thus, the identified oscillation, including the derived frequency, phase angle and amplitude thereof, represent power oscillations as they occur at the at least one measurement position in the power grid. Furthermore, since the performed measurements are referenced to the common time frame, the identified oscillation is also referenced to the common time frame. In particular, the derived phase angle of the identified oscillation is referenced to the common time frame.

A damping entity being connected to the power grid at a damping position is then selected. The damping entity is capable of supplying and/or consuming active and/or reactive power to/from the power grid, and of a kind which can be instructed to operate in a manner which contributes to damping and/or counteracting the identified oscillation in the power grid. Thus, the selected damping entity should be an entity which is making itself available for providing such services to the power grid, and which is capable of providing such services to an extent resulting in noticeable damping of the oscillation in the power grid. For instance, the selected damping entity may be connected to the power grid at a position where operation of the damping entity has a significant impact with regard to damping of the identified oscillation.

Next, a damping vector is generated, based on the identified oscillation in the power grid. The damping vector is targeted at the damping position, i.e. the position where the damping entity is connected to the power grid, references the common reference time frame, and specifies a frequency, a phase angle and an amplitude. Thus, the identified oscillation in the power grid and the generated damping vector both reference the common reference time frame, and are thus 'in agreement' regarding time measurements. In particular, there is an agreement between how the phase angle of the identified oscillation in the power grid and the phase angle of the generated damping vector relate to the common reference time frame, and thus these two phase angles are directly comparable.

The generated damping vector is provided to the damping entity. Based thereon and applying the common reference time frame, the damping entity reconstructs an oscillation signal corresponding to the oscillation in the power grid. Due to the common reference time frame, and to the phase angle of the oscillation in the power grid and the phase of the damping vector thus being directly comparable, the reconstructed oscillation signal accurately reflects the oscillation in the power grid as it appears at the damping position. Furthermore, since the information regarding the detected oscillation in the power grid is provided from the at least one measurement position to the damping entity in the form of a damping vector, compensation for a communication delay is not required, and the common reference time frame allows the received information to be directly applied for reconstructing the oscillation signal at the damping entity.

Finally, the damping entity supplies and/or consumes active and/or reactive power to/from the power grid in accordance with the reconstructed oscillation signal, thus causing damping of the oscillation in the power grid. As described above, the reconstructed oscillation signal accurately reflects the oscillation in the power grid as it appears at the damping position. Accordingly, when the damping entity supplies and/or consumes active and/or reactive power, at the damping position where it is connected to the power grid, this will accurately target the power oscillation, thus resulting in efficient and accurate damping thereof.

The steps of performing measurements, identifying an oscillation in the power grid, generating a damping vector, providing the damping vector to the damping entity, reconstructing an oscillation signal and supplying and/or consuming active and/or reactive power may be performed repeatedly and essentially in real time. According to this embodiment, the damping of the oscillation in the power grid closely follows changes in the oscillation, thus resulting in efficient and accurate damping over a period of time.

The step of performing measurements may comprise performing measurements at at least two separated measurement positions in the power grid. According to this embodiment, the oscillation in the power grid is identified based on measurements obtained at at least two separate and distinct positions within the power grid. This provides a more accurate identification of the oscillation.

The step of defining a common reference time frame may comprise applying synchronized GPS clocks at the measurement position(s) and at the damping position. This allows the common reference time frame to be defined in an accurate and well established manner, and using a reference which is readily available to all involved parties.

The damping entity may be a renewable power plant comprising a plurality of inverter-based resources. In the present context the term 'renewable power plant' should be interpreted to mean a power producing entity which relies on renewable resources, such as solar influx, wind, etc., for producing energy. According to this embodiment, the power is produced by means of a plurality of inverter-based resources forming part of the renewable power plant. The inverter-based resources comprise inverters which are applied for transforming the energy of a relevant renewable resource into electrical energy.

The renewable power plant may be a wind farm, and at least some of the inverter-based resources may be wind turbines. According to this embodiment, the damping entity is a wind farm with a number of wind turbines. Thus, the damping of the oscillation in the power grid is, in this case, at least partly provided by appropriately controlling one or more wind turbines.

Alternatively or additionally, the renewable power plant may comprise other kinds of inverter-based resources, such as photovoltaic inverters, battery energy storage systems, STATCOMS, electrolysers, etc.

In the case that the damping entity is a renewable power plant, the steps of the damping entity reconstructing an oscillation signal and providing and/or consuming active and/or reactive power may comprise the steps of:
- receiving the damping vector at a power plant controller,
- the power plant controller dispatching the damping vector and individual control instructions to one or more of the inverter-based resources of the renewable power plant, and
- the one or more inverter-based resources reconstructing the oscillation signal and providing active and/or reactive power to the power grid in accordance with the reconstructed oscillation signal and the received individual control instructions.

Renewable power plants, such as wind farms, solar farms, etc., often comprise a power plant controller being responsible for the overall control of the renewable power plant. For instance, the power plant controller may ensure that the individual power producers forming part of the renewable power plant are each operated in such a manner that the renewable power plant as such deliver requested services to the power grid, e.g. in the form of a requested level of active and/or reactive power, damping of oscillations in the power grid, etc.

According to this embodiment, when the damping vector is provided to the damping entity, it is provided to the power plant controller. In response to receiving the damping vector, the power plant controller dispatches the damping vector as well as individual control instructions to one or more of the inverter-based resources of the renewable power plant. Thus, at least some of the inverter-based resources are now in the possession of the damping vector.

The one or more inverter-based resources then reconstruct the oscillation signal and provide active and/or reactive power to the power grid in accordance with the reconstructed oscillation signal and the received individual control instructions. Thus, according to this embodiment, the power plant controller merely forwards the damping vector to the inverter-based resources, and the reconstruction of the oscillation signal as well as the decision regarding how the individual inverter-based resources should be operated in order to cause damping of the oscillation in the power grid is left to the inverter-based resources themselves.

Alternatively or additionally, the steps of the damping entity reconstructing an oscillation signal and providing and/or consuming active and/or reactive power may comprise the steps of:
- receiving the damping vector at a power plant controller,
- the power plant controller reconstructing the oscillation signal and dispatching the reconstructed oscillation signal and individual control instructions to one or more of the inverter-based resources of the renewable power plant, and
- the one or more inverter-based resources providing active and/or reactive power to the power grid in accordance with the received reconstructed oscillation signal and individual control instructions.

According to this embodiment, the reconstruction of the oscillation signal takes place at the power plant controller, and the power plant controller dispatches the reconstructed oscillation signal, rather than the damping vector, to one or more of the inverter-based resources of the renewable power plant, along with the individual control instructions. The inverter-based resources then provide active and/or reactive power to the power grid in accordance with the reconstructed oscillation signal and individual control instructions received from the power plant controller. Thus, according to this embodiment, the power plant controller, rather than the individual inverter-based resources, is responsible for determining how the inverter-based resources should be operated in order to cause damping of the oscillation in the power grid.

The power plant controller may dispatch the damping vector to all of the inverter-based resources expected to participate in the damping of the oscillation in the power grid. As an alternative, the power plant controller may dispatch the reconstructed oscillation signal to all of the inverter-based resources expected to participate in the damping of the oscillation in the power grid. As another alternative, the power plant controller may dispatch the damping vector to some of the inverter-based resources and the reconstructed oscillation signal to other inverter-based resources.

The damping vector may be a phasor. Phasors may typically be applied for describing related to the fundamental frequency of the power grid, and it is therefore very suitable that the damping vector is a phasor.

### BRIEF DESCRIPTION OF THE DRAWINGS

The invention will now be described in further detail with reference to the accompanying drawings in which
Fig. 1 is a functional flow diagram illustrating a method according to an embodiment of the invention,
Fig. 2 is a block diagram illustrating a method according to an embodiment of the invention,
Fig. 3 is a flow diagram illustrating control of a renewable power plant as part of a method according to an embodiment of the invention, and
Fig. 4 shows graphs illustrating a method according to an embodiment of the invention.

### DETAILED DESCRIPTION OF THE DRAWINGS

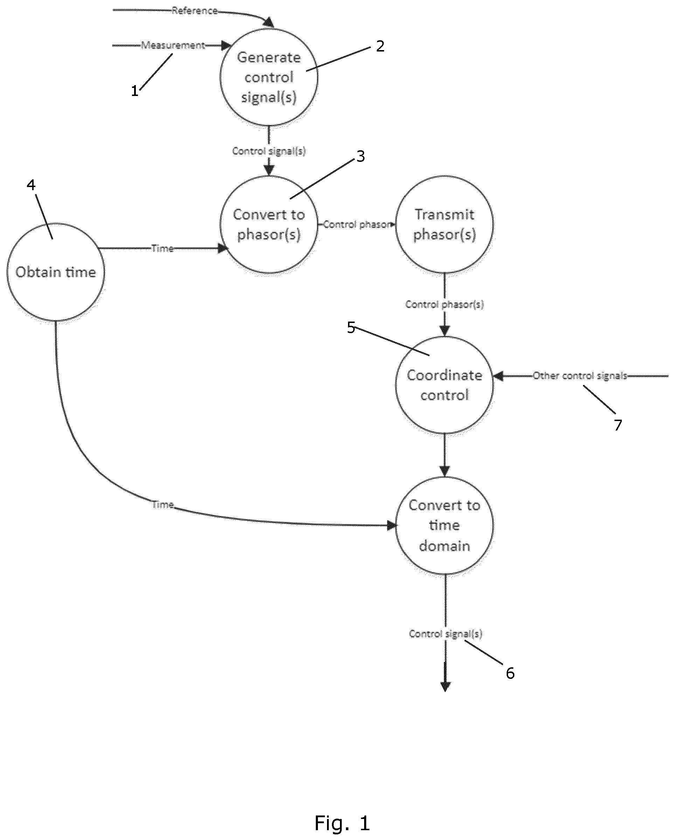

Fig. 1 is a functional flow diagram illustrating a method according to an embodiment of the invention. Measurements 1 are performed at at least one measurement position in a power grid. The measurements 1 include measurements of voltage amplitude, voltage phase angle, frequency and/or power flow of the power grid at the at least one measurement position.

The performed measurements 1 are provided to a processing node 2, where an oscillation in the power grid is identified, based on the measurements. At converting node 3, a frequency, a phase angle and an amplitude of the identified oscillation is derived, and a damping vector in the form of phasor specifying the frequency, phase angle and amplitude of the oscillation is derived. The damping vector is targeted at a damping position of a selected damping entity. Furthermore, the damping vector is referenced to a common reference time frame 4, e.g. being defined by synchronized GPS clocks.

The damping vector is provided to a controller 5 of the selected damping entity connected to the power grid at the damping position. The damping entity may, e.g., be in the form of a renewable power plant, such as a wind farm, comprising a plurality of inverter-based resources, such as wind turbines.

At the controller 5 of the damping entity, an oscillation signal corresponding to the oscillation in the power grid is reconstructed, based on the received damping vector and applying the common reference time frame 4. Finally, control signals 6 for the damping entity are generated, based on the reconstructed oscillation signal, and on further relevant control signals 7. The damping entity then supplies and/or consumes active and/or reactive power to/from the power grid in accordance with the control signals 6, thus causing damping of the oscillation in the power grid.

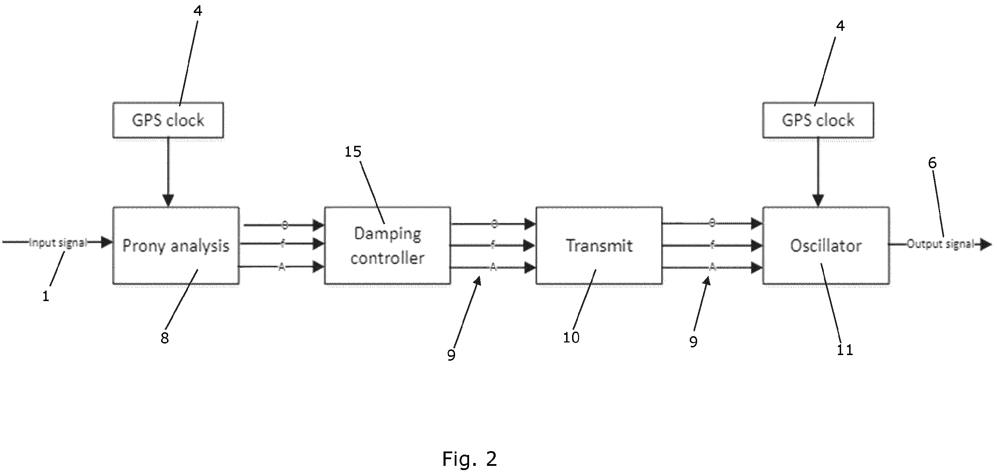

Fig. 2 is a block diagram illustrating a method according to an embodiment of the invention, similar to the embodiment illustrated in Fig. 1. Prony analysis 8 is performed on measurements 1 performed at at least one measurement position in the power grid in order to identify a frequency, f, a phase angle, θ, and an amplitude, A, of various oscillations. Based on the identified oscillations, a damping controller 15 generates a damping vector 9 specifying the frequency, f, the phase angle, θ, and the amplitude, A, of an identified oscillation in the power grid. The damping vector 9 references a common reference time frame 4.

The damping vector 9 is transmitted 10 to a damping entity 11, where an oscillation signal corresponding to the oscillation in the power grid, at the position of the damping entity 11, is reconstructed based on the damping vector 9 and applying the common reference time frame 4. Output control signals 6 are generated based on the reconstructed oscillation signal, and the damping entity 11 supplies and/or consumes active and/or reactive power to/from the power grid in accordance with the control signals 6, thus causing damping of the oscillation in the power grid.

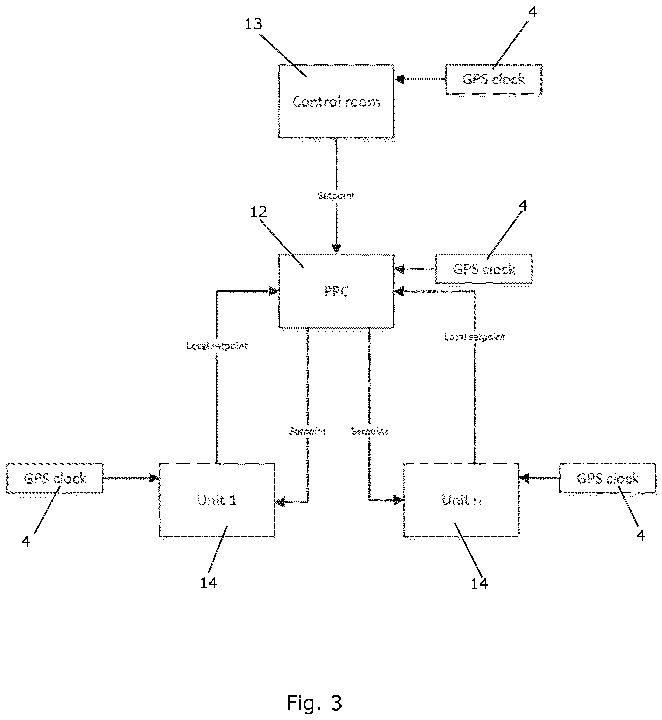

Fig. 3 illustrates control of a renewable power plant as part of a method according to an embodiment of the invention. A power plant controller 12 of the renewable power plant receives a damping vector from a grid operator 13. The damping vector is targeted at a damping position where the renewable power plant is connected to the power grid, specifies a frequency, a phase angle and an amplitude of an identified oscillation in the power grid, and references a common reference time frame 4.

The power plant controller 12 reconstructs an oscillation signal corresponding to the oscillation in the power grid, based on the received damping vector, and applying the common reference time frame 4. The power plant controller 12 then dispatches the reconstructed oscillation signal and individual control instructions to inverter-based resources 14 of the renewable power plant. The inverter-based resources 14 then provide active and/or reactive power to the power grid in accordance with the reconstructed oscillation signal and the respective individual control instructions, thus causing damping of the oscillation in the power grid.

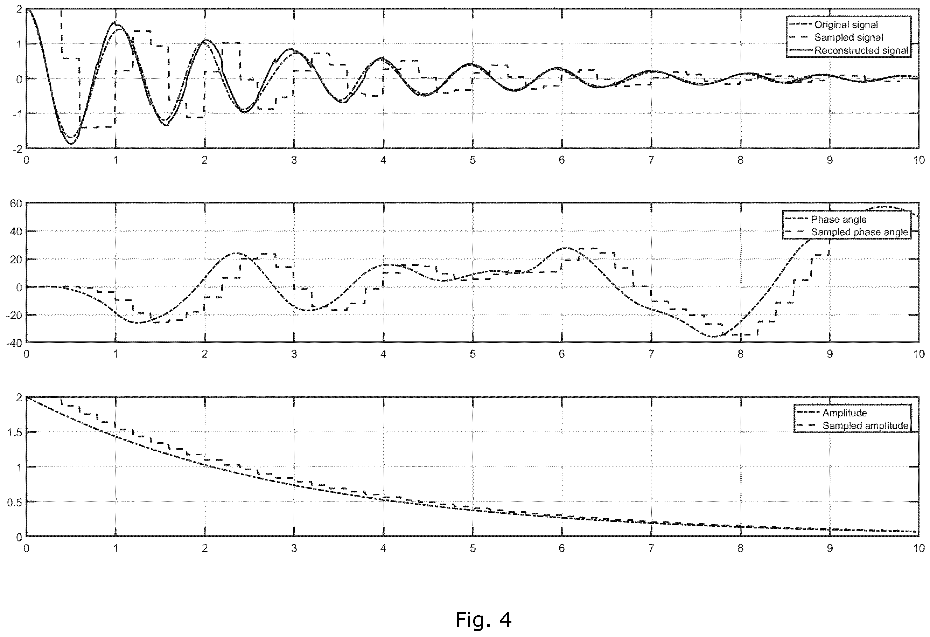

Fig. 4 shows graphs illustrating a method according to an embodiment of the invention. The upper graph illustrates an oscillation in a power grid as a function of time, in the form of a 1 Hz signal with a decaying amplitude and a randomly varying phase angle. The middle graph illustrates the phase angle of the oscillation of the upper graph as a function of time, and the lower graph illustrates the amplitude of the oscillation of the upper graph as a function of time.

In the upper graph, the dashed-dotted line represents measurements performed at at least two measurement positions in the power grid. The dashed line represents a signal received by a damping entity connected to the power grid at a damping position, in accordance with a prior art method. In the prior art method, the measured signal was sampled and the sampled signal communicated directly to the damping entity via a communication channel providing 5 samples per second and a 1 sample latency. It can be seen that the received signal is not closely following the originally measured signal. In particularly, the received signal exhibits a large phase delay relative to the original signal.

The solid line represents a reconstructed oscillation signal which has been obtained in accordance with an embodiment of the invention. It can be seen that the reconstructed oscillation signal closely follows the originally measured signal, in particular with regard to the phase. Thus, operating the damping unit in accordance with the reconstructed oscillation signal will result in accurate damping of the oscillation in the power grid.

In the middle graph, the dashed-dotted line represents the phase angle of the originally measured signal, and the dashed line represents the phase angle of the sampled signal illustrated by the dashed line in the upper graph. Also from the middle graph, it is clear that the phase angle of the sampled signal is shifted relative to the phase angle of the originally measured signal. Furthermore, the middle graph illustrates that the phase angle of the oscillation in the power grid varies randomly.

Similarly, in the lower graph, the dashed-dotted line represents the amplitude of the originally measured signal, and the dashed line represents the amplitude of the sampled signal. Again, it can be seen that the originally measured signal is not followed closely by the sampled signal. Furthermore, the lower graph illustrates that the amplitude of the oscillation in the power grid decreases or decays gradually as a function of time.

## Claims

1. A method for damping oscillations in a power grid, the method comprising the steps of:
- defining a common reference time frame (4) throughout the power grid,
- performing measurements (1), at at least one measurement position in the power grid, of voltage amplitude, voltage phase angle, frequency and/or power flow, and referencing the measurements (1) to the common reference time frame (4),
- identifying an oscillation in the power grid and deriving a frequency, a phase angle and an amplitude of the oscillation, based on the performed measurements (1),
- selecting a damping entity (11) being connected to the power grid at a damping position, the damping entity (11) being capable of supplying and/or consuming active and/or reactive power to/from the power grid,
- generating a damping vector (9) targeted at the damping position and referencing the common reference time frame (4), based on the identified oscillation in the power grid, the damping vector (9) specifying a frequency, a phase angle and an amplitude, and providing the damping vector to the damping entity (11),
- the damping entity (11) reconstructing an oscillation signal corresponding to the oscillation in the power grid, based on the damping vector (9) and applying the common reference time frame (4), and
- the damping entity (11) supplying and/or consuming active and/or reactive power to/from the power grid in accordance with the reconstructed oscillation signal, thus causing damping of the oscillation in the power grid.

2. A method according to claim 1, wherein the steps of performing measurements (1), identifying an oscillation in the power grid, generating a damping vector (9), providing the damping vector (9) to the damping entity (11), reconstructing an oscillation signal and supplying and/or consuming active and/or reactive power are performed repeatedly and essentially in real time.

3. A method according to claim 1 or 2, wherein the step of performing measurements (1) comprises performing measurements (1) at at least two separated measurement positions in the power grid.

4. A method according to any of the preceding claims, wherein the step of defining a common reference time frame (4) comprises applying synchronized GPS clocks at the measurement position(s) and at the damping position.

5. A method according to any of the preceding claims, wherein the damping entity (11) is a renewable power plant comprising a plurality of inverter-based resources (14).

6. A method according to claim 5, wherein the renewable power plant is a wind farm, and wherein at least some of the inverter-based resources (14) are wind turbines.

7. A method according to claim 5 or 6, wherein the steps of the damping entity (11) reconstructing an oscillation signal and providing and/or consuming active and/or reactive power comprises the steps of:
- receiving the damping vector (9) at a power plant controller (12),
- the power plant controller (12) dispatching the damping vector (9) and individual control instructions to one or more of the inverter-based resources (14) of the renewable power plant, and
- the one or more inverter-based resources (14) reconstructing the oscillation signal and providing active and/or reactive power to the power grid in accordance with the reconstructed oscillation signal and the received individual control instructions.

8. A method according to any of claims 5-7, wherein the steps of the damping entity (11) reconstructing an oscillation signal and providing and/or consuming active and/or reactive power comprises the steps of:
- receiving the damping vector (9) at a power plant controller (12),
- the power plant controller (12) reconstructing the oscillation signal and dispatching the reconstructed oscillation signal and individual control instructions to one or more of the inverter-based resources (14) of the renewable power plant, and
- the one or more inverter-based resources (14) providing active and/or reactive power to the power grid in accordance with the received reconstructed oscillation signal and individual control instructions.

9. A method according to any of the preceding claims, wherein the damping vector (9) is a phasor.
